# EUROPÄISCHE PATENTANMELDUNG

(11) **EP 4 104 989 A1**
(43) Veröffentlichungstag der Anmeldung: **21.12.2022**
(21) Anmeldenummer: 22158662.1
(22) Anmeldetag: 24.02.2022
(51) Int. Cl.: B27B 27/10, B23D 47/02, B27B 27/02

(54) **POSITIONIEREINRICHTUNG**

(30) Priorität: 14.06.2021 DE 102021115316
(71) Anmelder: Mafell AG, 78727 Oberndorf a.N. (DE)
(72) Erfinder: LUNZE, Stefan, 78727 Oberndorf am Neckar (DE)
(74) Vertreter: Manitz Finsterwald Patent- und Rechtsanwaltspartnerschaft mbB

(57) **Zusammenfassung**

Die Erfindung betrifft eine Positioniereinrichtung, insbesondere eine Anschlageinrichtung, bevorzugt Parallelanschlag, für eine Bearbeitungsmaschine, insbesondere für eine Unterflurzugsäge, Tischkreissäge oder Formatkreissäge, wobei die Positioniereinrichtung an der Bearbeitungsmaschine anbringbar und dazu ausgebildet ist, im an die Bearbeitungsmaschine angebrachten Zustand ein mittels der Bearbeitungsmaschine zu bearbeitendes Werkstück relativ zu einem Werkzeug der Bearbeitungsmaschine, insbesondere relativ zu einem Sägeblatt, zu positionieren, und wobei die Positioniereinrichtung umfasst: eine Basiseinheit, die an der Bearbeitungsmaschine anbringbar und dazu ausgebildet ist, im an der Bearbeitungsmaschine angebrachten Zustand ohne Spiel in einer vorgegebenen Lage relativ zur Bearbeitungsmaschine ausgerichtet zu sein, eine Ausrichteinheit, die an der Basiseinheit mit Spiel angeordnet ist und eine Ausrichtfläche aufweist, die einer an der Basiseinheit ausgebildeten Ausrichtfläche zugeordnet ist, eine, insbesondere mechanische, Betätigungseinheit, mit der die Ausrichteinheit aus einer mit dem Spiel behafteten Losestellung in eine spielfreie Feststellung bewegbar ist, in der die Ausrichteinheit mit ihrer Ausrichtfläche gegen die Ausrichtfläche der Basiseinheit gedrückt und ohne Spiel in einer vorgegebenen Lage relativ zur Basiseinheit ausgerichtet ist, und eine Positioniereinheit, die ohne Spiel fest mit der Ausrichteinheit verbunden und dazu ausgebildet ist, mit dem zu positionierenden Werkstück zusammenzuwirken.

## Beschreibung

Die Erfindung betrifft eine Positioniereinrichtung, insbesondere eine Anschlageinrichtung und bevorzugt einen Parallelanschlag, für eine Bearbeitungsmaschine, insbesondere für eine Unterflurzugsäge, eine Tischkreissäge oder eine Formatkreissäge, wobei die Positioniereinrichtung an der Bearbeitungsmaschine anbringbar und dazu ausgebildet ist, im an die Bearbeitungsmaschine angebrachten Zustand ein mittels der Bearbeitungsmaschine zu bearbeitendes Werkstück relativ zu einem Werkzeug der Bearbeitungsmaschine, insbesondere relativ zu einem Sägeblatt, zu positionieren.

Die Erfindung betrifft außerdem eine Bearbeitungsmaschine mit einer derartigen Positioniereinrichtung.

Derartige Positioniereinrichtungen sind grundsätzlich bekannt, beispielsweise in Form von sogenannten Parallelanschlägen, die dazu dienen, bei der Bearbeitung eines Werkstücks, beispielsweise einer Holzplatte, deren Position relativ zu einem Werkzeug, beispielsweise einem Sägeblatt, festzulegen, um so die Breite eines von einer Holzplatte abzutrennenden Werkstückstreifens festzulegen.

Bei bekannten Positioniereinrichtungen besteht das generelle Problem, dass beim Verstellen der Positioniereinrichtung relativ zum Werkzeug der Bearbeitungsmaschine insbesondere dann, wenn die Positioniereinrichtung verstellbar an der Bearbeitungsmaschine, beispielsweise einem Arbeitstisch, angebracht ist, es aufgrund dieses Verstellens zu einer Fehlausrichtung der Positioniereinrichtung kommt. Diese Fehlausrichtung bleibt beim anschließenden Fixieren der Positioniereinrichtung in einer jeweils eingestellten Position erhalten und führt so zu Ungenauigkeiten bei der Werkstückbearbeitung.

In diesem Zusammenhang kommt es bei Parallelanschlägen, die an Sägemaschinen eingesetzt werden und die eine langgestreckte Anschlageinheit aufweisen, beim Querverstellen der Anschlageinheit aufgrund eines vorhandenen Spiels im Parallelanschlag zu einer oftmals nur geringen, gleichwohl aber unerwünschten Schrägstellung der Anschlageinheit relativ zu einem Grundkörper, mit dem der Parallelanschlag an der Bearbeitungsmaschine angebracht ist. Eine Ursache für ein solches Spiel kann ein Spindeltrieb sein, der für eine Feineinstellung der Anschlageinheit relativ zu dem erwähnten Grundkörper dient. Eine solche Feineinstellung dient dazu, die Position der Anschlageinheit relativ zum Werkzeug zu verändern, ohne dabei die Position des am Arbeitstisch der Bearbeitungsmaschine befestigten Grundkörpers zu verändern. Dieses Spiel kann auch nicht dadurch beseitigt werden, dass - wie es ebenfalls aus dem Stand der Technik bekannt ist - die Anschlageinheit mit ihrem dem Grundkörper gegenüberliegenden Ende an der gegenüberliegenden Seite des Arbeitstisches fixiert wird.

Aufgabe der Erfindung ist es, eine Positioniereinrichtung und insbesondere einen Parallelanschlag der eingangs genannten Art dahingehend zu verbessern, dass unerwünschte Fehlausrichtungen relativ zum Werkzeug der Bearbeitungsmaschine so weit wie möglich unterbunden werden, wenn die Positioniereinrichtung als Ganzes oder teilweise in einem an der Bearbeitungsmaschine angeordneten Zustand relativ zum Werkzeug verstellt wird.

Die Lösung dieser Aufgabe erfolgt durch die Merkmale des Anspruchs 1.

Erfindungsgemäß ist vorgesehen, dass die Positioniereinrichtung umfasst: eine Basiseinheit, die an der Bearbeitungsmaschine anbringbar und dazu ausgebildet ist, im an der Bearbeitungsmaschine angebrachten Zustand ohne Spiel in einer vorgegebenen Lage relativ zur Bearbeitungsmaschine ausgerichtet zu sein, eine Ausrichteinheit, die an der Basiseinheit mit Spiel angeordnet ist und eine Ausrichtfläche aufweist, die einer an der Basiseinheit ausgebildeten Ausrichtfläche zugeordnet ist, eine, insbesondere mechanische, Betätigungseinheit, mit der die Ausrichteinheit aus einer mit dem Spiel behafteten Losestellung in eine spielfreie Feststellung bewegbar ist, in der die Ausrichteinheit mit ihrer Ausrichtfläche gegen die Ausrichtfläche der Basiseinheit gedrückt und ohne Spiel in einer vorgegebenen Lage relativ zur Basiseinheit ausgerichtet ist, und eine Positioniereinheit, die ohne Spiel fest mit der Ausrichteinheit verbunden und dazu ausgebildet ist, mit dem zu positionierenden Werkstück zusammenzuwirken.

Wenn es sich bei der Positioniereinrichtung um eine Anschlageinrichtung handelt, beispielsweise um einen Parallelanschlag, dann bildet die Positioniereinheit eine Anschlageinheit für ein Werkstück, beispielsweise eine Holzplatte, um von dieser mittels des Werkzeugs, beispielsweise eines Sägeblatts, Streifen mit einer vorgegebenen Breite abzutrennen. Diese Breite ist durch die Position einer Anschlagfläche der Anschlageinheit relativ zum Werkstück festgelegt, wenn der Parallelanschlag mit seiner Basiseinheit an der Bearbeitungsmaschine fest, also ohne Spiel, angebracht ist.

Zu erwähnen ist in diesem Zusammenhang, dass in der Praxis zwar der Begriff "Parallelanschlag" verwendet wird, gleichwohl keine exakte Parallelität zwischen dem Anschlag und der durch das Werkzeug, insbesondere das Sägeblatt, definierten Bearbeitungslinie gegeben sein muss. Vielmehr wird in der Praxis häufig mit einem auch einfach als Freischnitt bezeichneten Freiwinkel oder Freischnittwinkel gearbeitet, der so eingestellt ist, dass der Anschlag und die erwähnte Bearbeitungslinie um einen kleinen Winkel von beispielsweise 0,8° von einer exakten Parallelität abweichen. Durch einen solchen Freischnitt wird ein Einklemmen des Werkstücks zwischen Anschlag und Werkzeug verhindert.

Erfindungsgemäß ist einerseits die Positioniereinheit, beispielsweise also eine Anschlageinheit, ohne Spiel fest mit der Ausrichteinheit verbunden, die Ausrichteinheit allerdings ist - zusammen mit der Positioniereinheit - an der Basiseinheit mit Spiel angeordnet. Ein solches Spiel kann sich bereits alleine aufgrund der jeweiligen Konstruktion ergeben, und ein solches Spiel ergibt sich auch dann, wenn Einstellmöglichkeiten gegeben sind, die dazu dienen, die Positioniereinheit und somit auch die Ausrichteinheit relativ zur Basiseinheit verstellen zu können. Die Erfindung ermöglicht es nun, dieses Spiel zu beseitigen. Sollte zuvor beispielsweise bei einem wie zuvor erläuterten Einstellvorgang eine Fehlausrichtung der Positioniereinheit relativ zur Basiseinheit und somit relativ zum Werkzeug der Bearbeitungsmaschine, wenn die Basiseinheit an der Werkzeugmaschine angebracht ist, aufgetreten sein, wird diese Fehlausrichtung durch die Spielbeseitigung ebenfalls korrigiert, da erfindungsgemäß mit der Beseitigung des Spiels eine Ausrichtung der Ausrichteinheit und somit der mit dieser fest verbundenen Positioniereinheit an der Basiseinheit erfolgt, die wiederum im an der Bearbeitungsmaschine angebrachten Zustand korrekt relativ zur Bearbeitungsmaschine und somit zu deren Werkzeug ausgerichtet ist. Diese Ausrichtung erfolgt dadurch, dass die Ausrichteinheit einerseits und die Basiseinheit andererseits einander zugeordnete Ausrichtflächen aufweisen und die erfindungsgemäß vorgesehene, insbesondere mechanische, Betätigungseinheit so ausgebildet ist, dass sie die Ausrichteinheit mit ihrer Ausrichtfläche gegen die Ausrichtfläche der Basiseinheit drücken kann, womit dann auch die Ausrichteinheit ohne Spiel relativ zur Basiseinheit ausgerichtet ist. Damit ist dann auch die fest mit der Ausrichteinheit verbundene Positioniereinheit ohne Spiel relativ zur Basiseinheit und damit wiederum relativ zum Werkzeug der Bearbeitungsmaschine ausgerichtet.

Wie an anderer Stelle noch näher erläutert wird, kann zusätzlich eine Fixierung der Positioniereinheit an der Bearbeitungsmaschine erfolgen, beispielsweise an einer von der Basiseinheit entfernten Stelle, insbesondere an einer gegenüberliegenden Seite eines Arbeitstisches der Bearbeitungsmaschine. Eine solche zusätzliche Fixierung kann die Positioniertreue der Positioniereinheit beträchtlich erhöhen, insbesondere dann, wenn diese eine vergleichsweise große Länge aufweist. Gleichwohl ist das vorstehend erläuterte erfindungsgemäße Konzept der Ausrichtung durch Spielbeseitigung unabhängig davon, ob eine zusätzliche Fixierung der Positioniereinheit an einer anderen Stelle erfolgt oder nicht.

Vorteilhafte Ausgestaltungen der Erfindung sind auch in den abhängigen Ansprüchen, der Beschreibung sowie der Zeichnung angegeben.

Wie bereits erwähnt, kann die Positioniereinheit als ein Anschlag, insbesondere als ein Parallelanschlag, für das Werkstück ausgebildet sein.

Die Positioniereinheit kann eine langgestreckte Anschlageinheit mit einer sich in einer Längsrichtung erstreckenden Anschlagfläche für das Werkstück umfassen. Dabei kann insbesondere vorgesehen sein, dass die Ausrichtfläche der Ausrichteinheit senkrecht zur Längsrichtung der Anschlagfläche verläuft.

Grundsätzlich kann erfindungsgemäß die Betätigungseinheit an der Positioniereinheit oder an der Ausrichteinheit angeordnet sein. In einer vorteilhaften Ausgestaltung der Erfindung ist die Betätigungseinheit an der Positioniereinheit angeordnet oder insbesondere in die Positioniereinheit integriert. Auf dieses Konzept wird nachstehend anhand eines konkreten Ausführungsbeispiels näher eingegangen. Vorteilhaft hieran ist, dass so die Positioniereinheit und die Betätigungseinheit eine Einheit bilden, die über die Ausrichteinheit oder zumindest einen Bestandteil der Ausrichteinheit, beispielsweise einen insbesondere als Klemmbacke ausgebildeten Klemmkörper, mit der Basiseinheit verbunden werden können. Die Basiseinheit kann dann an einer Seite eines Arbeitstisches der Bearbeitungsmaschine angebracht werden, während die Positioniereinheit samt Betätigungseinheit sich oberhalb der Basiseinheit befindet, um eine Werkstückpositionierung auf einer Arbeitsauflage des Arbeitstisches bereitstellen zu können.

Gemäß einigen Ausführungsbeispielen der Erfindung kann vorgesehen sein, dass die Basiseinheit ein Gehäuse umfasst, in welches die Ausrichteinheit, insbesondere ein Klemmkörper oder eine Klemmbacke der Ausrichteinheit, aufgenommen ist. Hierdurch lässt sich eine besonders kompakte Anordnung erzielen.

Dabei kann vorgesehen sein, dass die Ausrichteinheit zwischen zwei einander gegenüberliegenden Begrenzungsabschnitten des Gehäuses angeordnet ist, von denen der eine mit der Ausrichtfläche der Basiseinheit versehen und der andere als Widerlager für die Betätigungseinheit ausgebildet ist. Hierbei kann sich die Betätigungseinheit, insbesondere ein an anderer Stelle näher erläutertes Treiborgan der Betätigungseinheit, an dem als Widerlager dienenden Begrenzungsabschnitt des Gehäuses abstützen und gleichzeitig die Ausrichteinheit gegen die Ausrichtfläche des anderen Begrenzungsabschnitts drücken.

Die erfindungsgemäß ohne Spiel fest mit der Ausrichteinheit verbundene Positioniereinheit ist vorzugsweise außerhalb des Gehäuses der Basiseinheit angeordnet. Die Basiseinheit, die erfindungsgemäß zur Anbringung der erfindungsgemäßen Positioniereinrichtung an der Bearbeitungsmaschine dient, kann hierdurch vergleichsweise kompakt ausgebildet sein, da sie zwar die Ausrichteinheit, nicht aber die Positioniereinheit aufnehmen muss.

Vorzugsweise kann vorgesehen sein, dass die Basiseinheit und die Ausrichteinheit im Bereich eines benutzerseitigen Endbereichs der Positioniereinheit angeordnet sind. Insbesondere dann, wenn die Positioniereinheit eine langgestreckte Anschlageinheit umfasst, können die Basiseinheit und die Ausrichteinheit an deren einem Ende angeordnet sein. An diesem Endbereich kann dann die Anbringung der Positioniereinrichtung mittels der Basiseinheit an der Bearbeitungsmaschine erfolgen, und auch die Ausrichtung der Ausrichteinheit und der mit dieser fest verbundenen Positioniereinheit an der Basiseinheit erfolgt dann an diesem Endbereich der Anschlageinheit.

Gemäß einigen Ausführungsbeispielen kann vorgesehen sein, dass die Positioniereinheit zusätzlich eine Fixiereinheit aufweist und dazu ausgebildet ist, mit der Fixiereinheit an der Bearbeitungsmaschine fixiert zu werden, wobei die Fixiereinheit mit Abstand von der Basiseinheit an der Positioniereinheit angeordnet ist. Dabei ist insbesondere vorgesehen, dass die Fixiereinheit an einem Endbereich der Positioniereinheit angeordnet ist, der einem benutzerseitigen Endbereich der Positioniereinheit gegenüberliegt.

Hierdurch ist es insbesondere möglich, die Positioniereinheit, insbesondere eine langgestreckte Anschlageinheit, an einander gegenüberliegenden Seiten der Bearbeitungsmaschine, insbesondere eines Arbeitstisches der Bearbeitungsmaschine, zu fixieren, nämlich einerseits mittels der Basiseinheit und andererseits mittels der Fixiereinheit. Wie an anderer Stelle bereits erwähnt, kann durch eine solche zusätzliche Fixierung der Positioniereinheit die Positioniertreue beträchtlich erhöht werden.

Um die erfindungsgemäße Einrichtung an unterschiedlich große Bearbeitungsmaschinen und insbesondere unterschiedlich breite oder lange Arbeitstische anpassen zu können, kann vorgesehen sein, dass die Positioniereinheit zur Veränderung des Abstandes zwischen Basiseinheit und Fixiereinheit und somit zur Anpassung an die Bearbeitungsmaschine in der Länge veränderlich ist. Hierzu kann vorgesehen sein, dass die Positioniereinheit teleskopierbar ist. Ein beispielsweise als Innenprofil ausgebildeter Bestandteil einer solchen Teleskopeinrichtung kann an seinem einen Ende die Fixiereinheit tragen und innerhalb eines beispielsweise als kastenförmiges Gehäuse ausgebildeten Trägers längsverschieblich angeordnet und so als Auszug ausgebildet sein, wobei dieser Träger an seinem anderen Ende mit der Ausrichteinheit fest verbunden ist, die erfindungsgemäß an der Basiseinheit angeordnet ist, mit der die Positioniereinrichtung an der Bearbeitungsmaschine anbringbar ist. Eine solche Anordnung umfasst dann zwei Teleskopelemente, nämlich den gehäuseartigen Träger und das als Auszug ausgebildete Innenprofil, wobei in alternativen Ausgestaltungen auch eine größere Anzahl von Teleskopelementen vorgesehen sein kann.

In einer vorteilhaften Weiterbildung der Erfindung ist die Betätigungseinheit, mit der erfindungsgemäß die Ausrichteinheit aus der mit Spiel behafteten Losestellung in die spielfreie Feststellung bewegbar ist, zusätzlich dazu ausgebildet, die Fixiereinheit zwischen einer Fixierstellung und einer Freigabestellung zu bewegen. Eine separate Betätigungseinheit für die Fixiereinheit ist dann nicht erforderlich.

Hierbei kann insbesondere vorgesehen sein, dass die Betätigungseinheit derart ausgebildet ist, dass im Zuge eines Betätigungsvorgangs die Ausrichteinheit und die Fixiereinheit zeitlich nacheinander bewegbar sind. Eine von einem Benutzer durchzuführende Betätigungsbewegung kann beispielsweise eine Drehung eines Betätigungsorgans umfassen, wobei eine hierbei vorgesehene Gesamtdrehung zwei aufeinanderfolgende Betätigungswinkel umfassen kann, wobei eine erste Teildrehung dazu dienen kann, das Spiel zu beseitigen, also die Ausrichteinheit mit ihrer Ausrichtfläche gegen die Ausrichtfläche der Basiseinheit zu drücken, und bei weitergehender Drehung dann die Fixiereinheit betätigt wird, um diese von der Freigabestellung in die Fixierstellung zu überführen, beispielsweise durch Bewegen eines Fixierorgans der Fixiereinheit. Hierauf wird in Verbindung mit einem konkreten Ausführungsbeispiel nachstehend näher eingegangen.

Der Benutzer kann folglich insbesondere an einem benutzerseitigen Endbereich der Positioniereinrichtung mit einer einzigen Betätigungsbewegung, sozusagen "in einem Rutsch", zwei Funktionen ausführen, nämlich einerseits die Ausrichtung der Ausrichteinheit und somit der Positioniereinheit und daraufhin die Fixierung der ausgerichteten Positioniereinheit an einer anderen, entfernt von der Basiseinheit befindlichen Stelle.

Hierdurch wird bei denkbar einfacher Bedienbarkeit eine sehr hohe Positioniergenauigkeit geschaffen.

Gemäß einigen Ausführungsbeispielen der Erfindung kann die Ausrichteinheit einen Klemmkörper umfassen, der an einer Seite mit der Ausrichtfläche versehen ist und an einer gegenüberliegenden Seite eine Treibfläche aufweist, die mittels der Betätigungseinheit beaufschlagbar ist. Der Klemmkörper kann in Form einer Klemmbacke vorgesehen sein. Vorzugsweise ist die Ausrichtfläche des Klemmkörpers größer als seine Treibfläche. Eine vergleichsweise große Ausrichtfläche ermöglicht eine besonders exakte Ausrichtung der Ausrichteinheit. Für die Treibfläche genügt es, diese so beaufschlagen zu können, dass eine zuverlässige Bewegung der Ausrichteinheit aus der mit Spiel behafteten Losestellung in die spielfreie Feststellung möglich ist.

Gemäß einigen Ausführungsbeispielen kann vorgesehen sein, dass die Betätigungseinheit ein zwischen einer passiven Stellung, die der Losestellung der Ausrichteinheit entspricht, und einer aktiven Stellung, die der Feststellung der Ausrichteinheit entspricht, bewegbares Treiborgan umfasst, das in der aktiven Stellung einerseits an einem von der Basiseinheit gebildeten Widerlager abgestützt ist und andererseits die Ausrichteinheit beaufschlagt und dabei diese mit ihrer Ausrichtfläche gegen die Ausrichtfläche der Basiseinheit drückt.

Dabei kann vorgesehen sein, dass die Bewegung des Treiborgans in seine aktive Stellung in eine Bewegung der Ausrichteinheit gegen die Ausrichtfläche der Basiseinheit umsetzbar ist. Einfache und zuverlässige, aus der Mechanik bekannte Konzepte können für eine derartige Übertragung von Bewegungen genutzt werden.

So kann erfindungsgemäß vorgesehen sein, dass das Treiborgan eine Steuerfläche aufweist, insbesondere eine Keilfläche, die bei der Bewegung des Treiborgans in seine aktive Stellung eine Treibfläche der Ausrichteinheit beaufschlagt, wobei insbesondere die Treibfläche der Ausrichteinheit eine Keilfläche umfasst.

In einer bevorzugten Ausgestaltung können also das Treiborgan der Betätigungseinheit und die zu bewegende Ausrichteinheit über kooperierende Keilflächen zusammenwirken, damit das Treiborgan seine Bewegung in die erwünschte Bewegung der Ausrichteinheit in deren spielfreie Feststellung bewirken kann.

Das Treiborgan kann ein Klemmorgan umfassen, insbesondere einen mit einer Keilfläche versehenen, bevorzugt plattenförmigen Klemmkeil. Das Klemmorgan kann in seiner aktiven Stellung zwischen ein von der Basiseinheit gebildetes Widerlager und die Ausrichteinheit geklemmt sein. In diesem Ausführungsbeispiel ist also vorgesehen, dass der Benutzer durch die Betätigung der Betätigungseinheit ein beispielsweise plattenförmiges Klemmorgan zwischen Basiseinheit und Ausrichteinheit klemmt, beispielsweise zwischen einen Gehäuseabschnitt der Basiseinheit und eine Treibfläche der Ausrichteinheit drückt, um auf diese Weise ein vorhandenes Spiel zu beseitigen.

Eine Bewegung des Treiborgans zwischen seiner passiven Stellung und seiner aktiven Stellung kann unabhängig von seiner konkreten Ausgestaltung eine Translationsbewegung sein, die insbesondere parallel zur Ausrichtfläche der Ausrichteinheit erfolgt.

Gemäß einigen Ausführungsbeispielen kann vorgesehen sein, dass die Betätigungseinheit eine Stelleinrichtung und ein mit der Stelleinrichtung zusammenwirkendes Betätigungsorgan umfasst, wobei das Betätigungsorgan durch einen Benutzer bewegbar und diese Betätigungsbewegung des Betätigungsorgans in eine in die Bewegung der Ausrichteinheit umsetzbare Stellbewegung der Stelleinrichtung umsetzbar ist.

Vorzugsweise umfasst die Stelleinrichtung eine Welle mit einer Längsachse, wobei die Stellbewegung der Welle eine Drehung um deren Längsachse ist.

Vorzugsweise umfasst die Stelleinrichtung zusätzlich zu der Welle zumindest ein Treiborgan, wobei die Stellbewegung der Welle in eine Bewegung des Treiborgans zwischen einer passiven Stellung und einer aktiven Stellung umsetzbar ist. Dabei kann insbesondere vorgesehen sein, dass die Welle mit einem Steuerabschnitt, insbesondere einem Exzenterabschnitt, versehen ist, der mit dem Treiborgan derart zusammenwirkt, dass das Treiborgan bei einer Drehung der Welle seine Bewegung in einer senkrecht zur Längsachse der Welle verlaufenden Ebene ausführt.

Eine solche Anordnung ist besonders vorteilhaft in Verbindung mit einer langgestreckten Positioniereinheit, die insbesondere eine langgestreckte Anschlageinheit umfasst. Die Welle kann in die langgestreckte Positioniereinheit integriert werden und sich im an die Bearbeitungsmaschine angebrachten Zustand horizontal erstrecken, wobei durch Drehen der Welle das Treiborgan, beispielsweise ein Klemmkeil, senkrecht zur Längsachse der Welle innerhalb der Basiseinheit bewegt wird, um beispielsweise zwischen einen Gehäuseabschnitt der Basiseinheit und die Ausrichteinheit gedrückt zu werden.

Gemäß einer vorteilhaften Weiterbildung kann die Welle mit zumindest einem weiteren, entlang der Längsachse vom Steuerabschnitt für das Treiborgan entfernt gelegenen Steuerabschnitt, insbesondere einem Exzenterabschnitt, versehen sein, der mit einem zusätzlich zu dem Treiborgan vorgesehenen Funktionsorgan derart zusammenwirkt, dass das Funktionsorgan bei einer Drehung der Welle eine Arbeitsbewegung in einer senkrecht zur Längsachse der Welle verlaufenden Ebene ausführt. Durch Betätigen der Welle können somit mehrere Funktionen gleichzeitig oder zeitlich nacheinander oder zeitlich überlappend ausgeführt werden.

In einer vorteilhaften Weiterbildung ist das Funktionsorgan ein Bestandteil einer Fixiereinheit der Positioniereinheit, wobei die Arbeitsbewegung des Funktionsorgans die Fixiereinheit zwischen einem Fixierzustand und einem Freigabezustand verstellt.

Hierbei wird folglich die Welle dazu genutzt, an einer Stelle die Ausrichteinheit zu beaufschlagen und an einer davon entfernten Stelle die Fixiereinheit zu betätigen.

Dabei kann die Welle mehrteilig derart ausgeführt sein, dass eine Teleskopierbarkeit der Positioniereinheit ermöglicht wird und beim Verlängern der Positioniereinheit auch die Welle verlängert wird. Beispielsweise kann zwischen zwei Abschnitten der Welle ein Verlängerungsstück angeordnet sein, beispielsweise ein Rohr oder eine Buchse. Ein Wellenabschnitt kann in dieser Verlängerung längsverschieblich angeordnet sein, wobei ein anderer Abschnitt der Welle fest mit der Verlängerung verbunden ist.

Gemäß einigen Ausführungsbeispielen kann vorgesehen sein, dass eine Einstelleinrichtung vorgesehen ist, mit der die Positioniereinheit relativ zur Basiseinheit verstellbar ist, insbesondere in einer Richtung parallel zur Ausrichtfläche der Ausrichteinheit. Diese Einstelleinrichtung kann vorzugsweise mit der Ausrichteinheit zusammenwirken.

Eine derartige Einstelleinrichtung ermöglicht es, bei bereits fest an der Bearbeitungsmaschine angebrachter Basiseinheit die Positioniereinheit relativ zur Basiseinheit zu verstellen. Hierdurch kann eine Feineinstellung realisiert werden, wie sie eingangs bereits erläutert worden ist. Die Einstelleinrichtung kann beispielsweise einen Spindeltrieb umfassen.

Ein mit einem solchen Spindeltrieb einhergehendes Spiel kann in einer Weiterbildung der Erfindung dadurch eliminiert werden, dass eine zwischen dem Basisteil und der Ausrichteinheit wirksame Druckfeder oder ein anderes Rückstellelement vorgesehen ist, mit welchem die Ausrichteinheit in eine Richtung relativ zu der Basiseinheit vorgespannt werden kann.

Des Weiteren kann erfindungsgemäß vorgesehen sein, dass die Basiseinheit mit einer Nachstelleinrichtung versehen ist, mit der das Spiel, mit dem die Ausrichteinheit in ihrer Losestellung behaftet ist, verringerbar ist. Die Nachstelleinrichtung kann derart ausgebildet sein, dass sie dazu in der Lage ist, die Position eines Widerlagers für die Betätigungseinheit, insbesondere für ein Treiborgan der Betätigungseinheit, zu verändern.

In einer einfachen und zuverlässigen Ausgestaltung kann beispielsweise ein Gewindestift in einem Gehäuseabschnitt der Basiseinheit verdrehbar angeordnet sein, dessen wirksames Ende als durch dieses Verdrehen verstellbares Widerlager für die Betätigungseinheit dient, beispielsweise für einen zwischen die Ausrichteinheit und das Widerlager einschiebbaren Klemmkeil. Eine sich im Laufe der Zeit aufgrund von Verschleiß einstellenden Vergrößerung des Spiels für die Ausrichteinheit innerhalb der Basiseinheit kann so durch Verdrehen des Gewindestiftes kompensiert werden, da auf diese Weise der Abstand zwischen Widerlager und Ausrichteinheit wieder auf das der betreffenden Abmessung des Treiborgans, beispielsweise der Dicke eines das Treiborgan bildenden Klemmteils, entsprechende Maß gebracht werden kann.

Die erfindungsgemäße Bearbeitungsmaschine, insbesondere eine Unterflurzugsäge, Tischkreissäge oder Formatkreissäge, die mit einer erfindungsgemäßen

Positioniereinrichtung versehen werden kann, ist vorzugsweise mit einer horizontalen Arbeitsauflage versehen, wobei die Positioniereinrichtung dazu ausgebildet ist, das Werkstück im auf der Arbeitsauflage aufliegenden Zustand relativ zu dem Werkzeug zu positionieren.

Dabei kann vorgesehen sein, dass die Bearbeitungsmaschine an zumindest einer Seite eines die Arbeitsauflage bereitstellenden Arbeitstisches und unterhalb einer von der Arbeitsauflage definierten Ebene ein fest mit dem Arbeitstisch verbundenes, bevorzugt hintergreifbares und insbesondere als Schwalbenschwanzprofil ausgebildetes, Befestigungsprofil aufweist, an dem die Positioniereinrichtung mit ihrer Basiseinheit anbringbar ist, insbesondere durch Festklemmen.

Die Erfindung wird im Folgenden beispielhaft und unter Bezugnahme auf die Zeichnung beschrieben. Es zeigen:
- Fig. 1: eine Ausführungsform einer als Parallelanschlag ausgebildeten erfindungsgemäßen Positioniereinheit im an einem Arbeitstisch einer Bearbeitungsmaschine angebrachten Zustand in einer mit der der Figur rechten Seite nach unten gekippten Draufsicht,
- Fig. 2: die Anordnung von Fig. 1 in einer Seitenansicht,
- Fig. 3: die Anordnung von Fig. 1 in einer mit der in der Figur unteren Seite nach unten gekippten Ansicht,
- Fig. 4: die erfindungsgemäße Positioniereinrichtung in einer Seitenansicht gemäß Fig. 2 ohne Arbeitstisch,
- Fig. 5: die erfindungsgemäße Positioniereinrichtung in einer nicht gekippten Draufsicht ohne Arbeitstisch,
- Fig. 6: die erfindungsgemäße Positioniereinrichtung in einer teilgeschnittenen Ansicht,
- Fig. 7: die erfindungsgemäße Positioniereinrichtung in einer Ansicht gemäß Fig. 6 ohne Schnitt,
- Fig. 8: die erfindungsgemäße Positioniereinrichtung in einer perspektivischen Ansicht schräg von unten in ein Gehäuse der Basiseinheit hinein,
- Fig. 9: die erfindungsgemäße Positioniereinrichtung in einem Vertikalschnitt in einem benutzerseitigen Endbereich,
- Fig. 10 und 11: die erfindungsgemäße Positioniereinrichtung in einer Draufsicht bzw. einer vertikal geschnittenen Seitenansicht mit in der Losestellung befindlicher Ausrichteinheit und im Freigabezustand befindlicher Fixiereinheit, und
- Fig. 12 und 13: Ansichten entsprechenden Fig. 10 und Fig. 11 mit in der Feststellung befindlicher Ausrichteinheit und im Fixierzustand befindlicher Fixiereinheit.

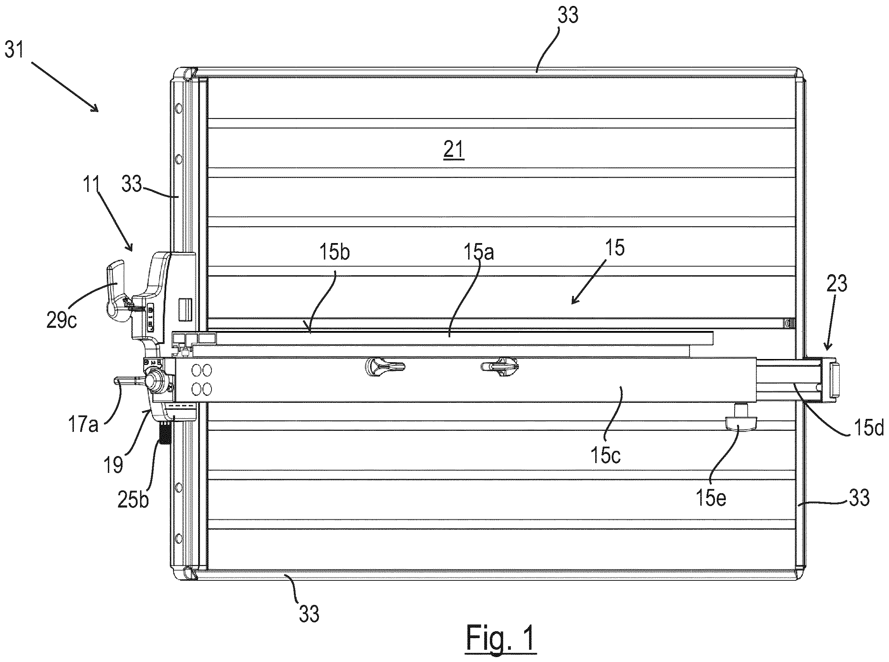

Die Fig. 1 bis 3 zeigen einen erfindungsgemäßen Parallelanschlag an einer Bearbeitungsmaschine, von der lediglich ein Arbeitstisch 31 dargestellt ist, dessen Oberseite eine Arbeitsauflage 21 für ein zu bearbeitendes Werkstück (nicht dargestellt) aufweist. Bei der Bearbeitungsmaschine kann es sich beispielsweise um eine Unterflurzugsäge handeln. Derartige Sägen sind grundsätzlich bekannt, so dass hierauf nicht näher eingegangen zu werden braucht. Unterhalb des Arbeitstisches 31 eine solchen Säge befindet sich eine motorische Antriebseinheit für ein Sägeblatt, das von unten durch einen im Arbeitstisch 31 ausgebildeten Schlitz (nicht dargestellt) hindurchragt und nach oben über die Arbeitsauflage 21 hinaus vorsteht, um auf der Arbeitsauflage 21 aufliegende Werkstücke zu bearbeiten. Die aufliegenden Werkstücke können prinzipiell auf der Arbeitsauflage 21 durch das Sägeblatt hindurchgeschoben werden, um zerteilt zu werden. Eine bestimmungsgemäße Benutzung erfolgt allerdings derart, dass die Antriebseinheit samt Sägeblatt mittels einer hier nicht dargestellten Zugmechanik von einem Benutzer relativ zum Arbeitstisch 31 bewegt wird, nämlich entlang der Bearbeitungslinie des Sägeblatts gezogen wird, so dass das Sägeblatt durch das auf der Arbeitsauflage 21 ruhende Werkstück hindurchbewegt wird und hierdurch das Werkstück zerteilt.

Um die Position des Werkstücks relativ zum Sägeblatt festzulegen und so eine definierte Breite eines von dem Werkstück abzutrennenden bzw. eines verbleibenden Streifens vorzugeben, ist der erfindungsgemäße Parallelanschlag vorgesehen.

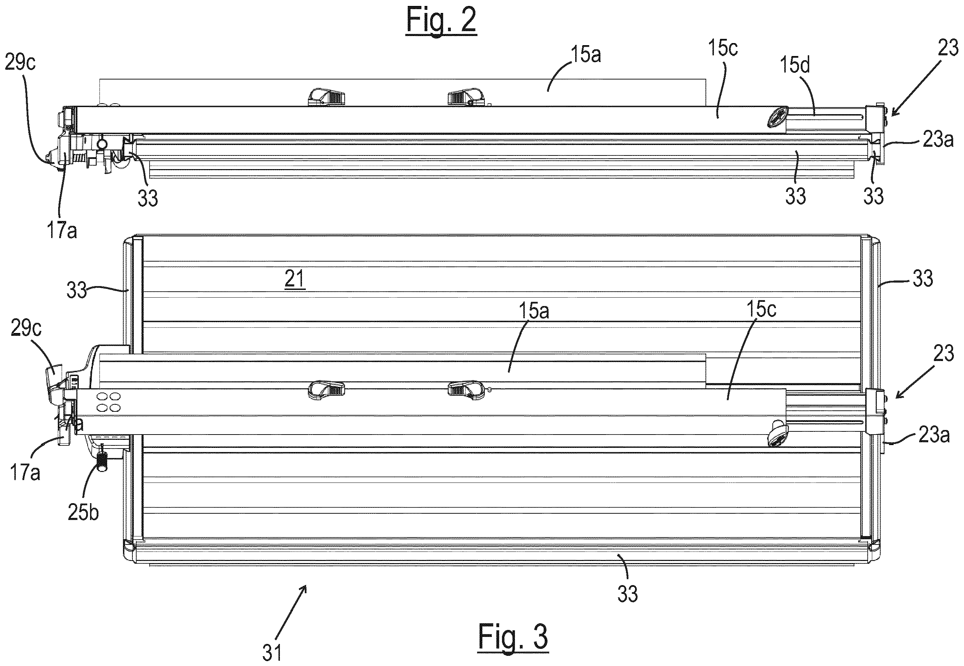

Während Fig. 2 eine Seitenansicht zeigt, sind die Fig. 1 und 3 perspektivische Ansichten. In Fig. 1 ist der Arbeitstisch 31 samt Parallelanschlag derart gekippt dargestellt, dass die in Fig. 1 rechte Seite tiefer liegt als die linke Seite. In Fig. 3 ist ebenfalls eine gekippte Stellung dargestellt, in der die in Fig. 3 untere Seite des Arbeitstisches 31 tiefer liegt als die obere Seite.

Der erfindungsgemäße Parallelanschlag umfasst eine Positioniereinheit 15 mit einer Anschlageinheit 15a, an der eine vertikale Anschlagfläche 15b für ein Werkstück ausgebildet ist. Die Positioniereinheit 15 ist teleskopierbar und umfasst zusätzlich zu einem langgestreckten Träger 15c ein als Auszug 15d dienendes Innenprofil, das mittels einer Feststellschraube 15e in einer jeweiligen Teleskopstellung relativ zum Träger 15c feststellbar ist, um auf diese Weise eine eingestellte Länge der Positioniereinheit 15 zu fixieren.

Am freien Ende des Auszugs 15d ist eine Fixiereinheit 23 mit einem Fixierorgan 23a angebracht. Auf die Funktionalität dieser Fixiereinheit 23 wird an anderer Stelle näher eingegangen.

Des Weiteren umfasst der erfindungsgemäße Parallelanschlag eine Basiseinheit 11 mit einem Gehäuse 19. Mit der Basiseinheit 11 ist die Positioniereinheit 15 nicht unmittelbar verbunden, sondern mittelbar über eine an anderer Stelle näher beschriebene Ausrichteinheit, die einen in das Gehäuse 19 der Basiseinheit 11 aufgenommenen Klemmkörper (in den Fig. 1 bis 3 nicht dargestellt) umfasst. Mit der Oberseite dieses Klemmkörpers ist der Träger 15c der Positioniereinheit 15 ohne Spiel fest verbunden. Von einer Einstelleinrichtung für den Klemmkörper und somit für die Ausrichteinheit ist eine Handhabe 25b dargestellt, mittels welcher die Position des Klemmkörpers und somit der Positioniereinheit 15 quer zu ihrer Längserstreckung relativ zur Basiseinheit 11 verstellt werden kann. Die mit einer Rändelung versehene Handhabe 25b ist Teil eines für diese Quereinstellung, die auch als Feineinstellung bezeichnet wird, vorgesehenen Spindeltriebs, wobei die Handhabe 25b einstückig mit der Spindel dieses Spindeltriebs ausgebildet ist.

Bei dem Bauteil 17a handelt es sich um einen als Betätigungsorgan dienenden Hebel, der ein Bestandteil einer Betätigungseinheit des erfindungsgemäßen Parallelanschlags ist. Diese Betätigungseinheit dient dazu, den erwähnten Klemmkörper an der Basiseinheit 11 auszurichten, um auf diese Weise auch die fest mit dem Klemmkörper verbundene Positioniereinheit 15 relativ zum Basisteil 11 auszurichten. Des Weiteren dient diese Betätigungseinheit zum Betätigen der vorstehend erwähnten Fixiereinheit 23. Auch auf diese Funktionalitäten wird an anderer Stelle näher eingegangen.

Des Weiteren zeigen die Fig. 1 bis 3 einen Hebel 29c, der ein Bestandteil einer Klemmeinrichtung 29 ist, die zum Festklemmen der Basiseinheit 11 an einem Befestigungsprofil 33 des Arbeitstisches 31 dient. Diese Art und Weise der Klemmung eines Bauteils an ein Profil eines Arbeitstisches ist grundsätzlich bekannt, z.B. aus EP 3 733 336 A1 (dort Fig. 14 bis 17). Hierauf wird ausdrücklich Bezug genommen.

Das Befestigungsprofil 33 ist an allen vier Seiten des Arbeitstisches 31 ausgebildet, so dass der Parallelanschlag mit seiner Basiseinheit 11 an einer beliebigen Stelle befestigt werden kann. Im noch nicht festgeklemmten Zustand ist die Basiseinheit 11 entlang des jeweiligen Profils 33 verschiebbar. In der jeweils gewünschten Bearbeitungsposition kann durch Betätigen des Hebels 29c die Position der Basiseinheit 11 am Profil 33 und damit am Arbeitstisch 31 fixiert werden. Dabei sind die Klemmeinrichtung mit dem Hebel 29c einerseits und das Befestigungsprofil 33 andererseits so ausgebildet, dass im festgeklemmten Zustand die Basiseinheit 11 ohne Spiel in einer vorgegebenen Lage relativ zum Arbeitstisch 31 und somit zur Bearbeitungsmaschine und insbesondere zu dessen Werkzeug, nämlich dem Sägeblatt, ausgerichtet.

Die Positioniereinheit 15 ist damit noch nicht exakt relativ zum Werkzeug ausgerichtet, da der erwähnte Klemmkörper, mit dem die Positioniereinheit 15 ohne Spiel fest verbunden ist, im erwähnten Gehäuse 19 der Basiseinheit 11 mit Spiel angeordnet ist. Eine feste, spielfreie Verbindung der Positioniereinheit 15 an der Basiseinheit 11 ist hier nicht vorgesehen, da die Einstelleinrichtung mit der in den Fig. 1 bis 3 dargestellten Handhabe 25b die erwähnte Querverstellung des erwähnten Klemmkörpers im Gehäuse 19 der Basiseinheit 11 und damit der Positioniereinheit 15 relativ zur Basiseinheit 11 ermöglicht.

Wie im Einleitungsteil erwähnt, dient die erfindungsgemäße Betätigungseinheit mit dem Hebel 17a dazu, den erwähnten Klemmkörper und damit die damit fest verbundene Positioniereinheit 15 relativ zur Basiseinheit 11 auszurichten, wenn die gewünschte Position der Positioniereinheit 15 relativ zum Werkzeug erreicht ist.

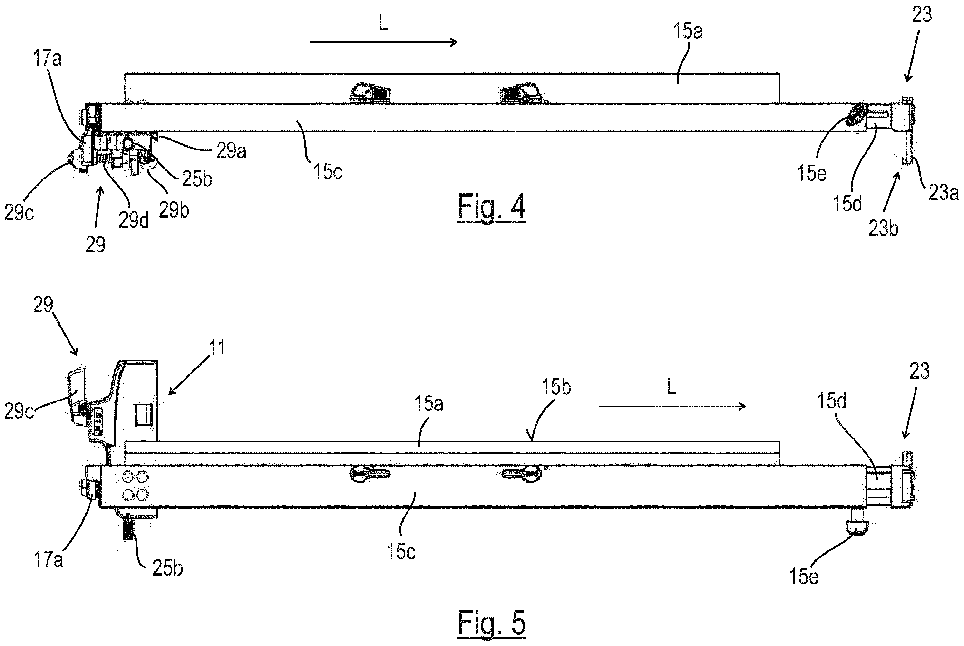

In den Fig. 4 und 5 ist der erfindungsgemäße Parallelanschlag jeweils ohne Arbeitstisch dargestellt. In Fig. 4 ist sozusagen das "Negativ" des erwähnten Schwalbenschwanzprofils 33 (vgl. Fig. 1 bis 3) zu erkennen, das von einer oberen Klemmbacke 29a und einer unteren Klemmbacke 29b der Klemmeinrichtung 29 gebildet wird. Wenn sich die untere Klemmbacke 29b in einer Freigabestellung befindet, kann die Basiseinheit 11 und damit der gesamte Parallelanschlag mittels der oberen Klemmbacke 29a in das Schwalbenschwanzprofil 33 des Arbeitstisches 31 eingehängt und entlang des Profils 33 verschoben werden. In einer jeweils gewünschten Position kann durch Betätigen des Hebels 29c der Klemmeinrichtung 29 die Basiseinheit 11 an dem Profil 33 des Arbeitstisches 31 festgeklemmt werden. Eine Druckfeder 29d beseitigt Spiel, worauf hier aber nicht näher eingegangen wird, da - wie bereits erwähnt - ein derartiges Klemmkonzept bereits aus dem Stand der Technik bekannt ist.

Wie Fig. 4 ebenfalls zeigt, besitzt das Fixierorgan 23a der Fixiereinheit 23 an seinem freien Ende einen Fortsatz 23b, der ebenfalls hinsichtlich seiner Form dem Schwalbenschwanzprofil entspricht. Wie an anderer Stelle noch näher erläutert wird, ist dieses Fixierorgan 23a in vertikaler Richtung bewegbar, um zwischen einer Freigabestellung und einer Fixierstellung verstellt werden zu können.

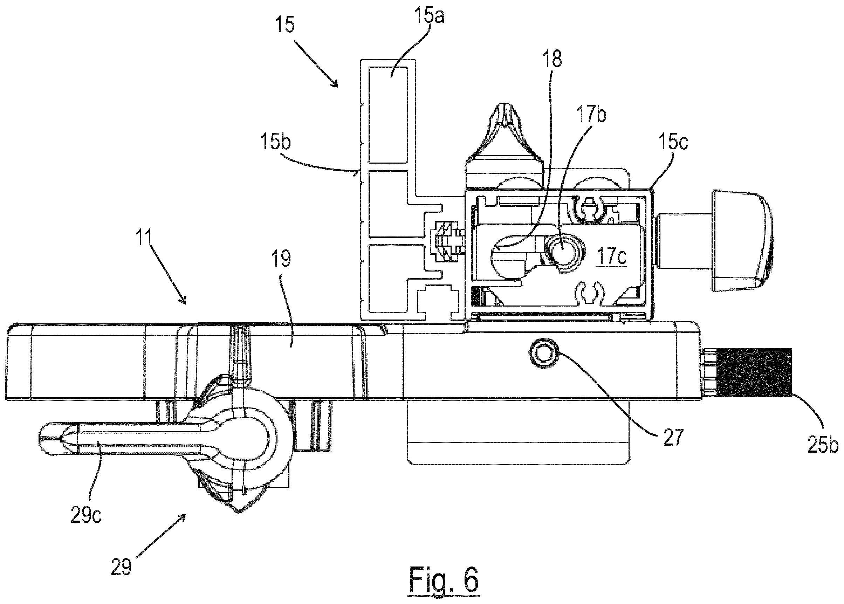

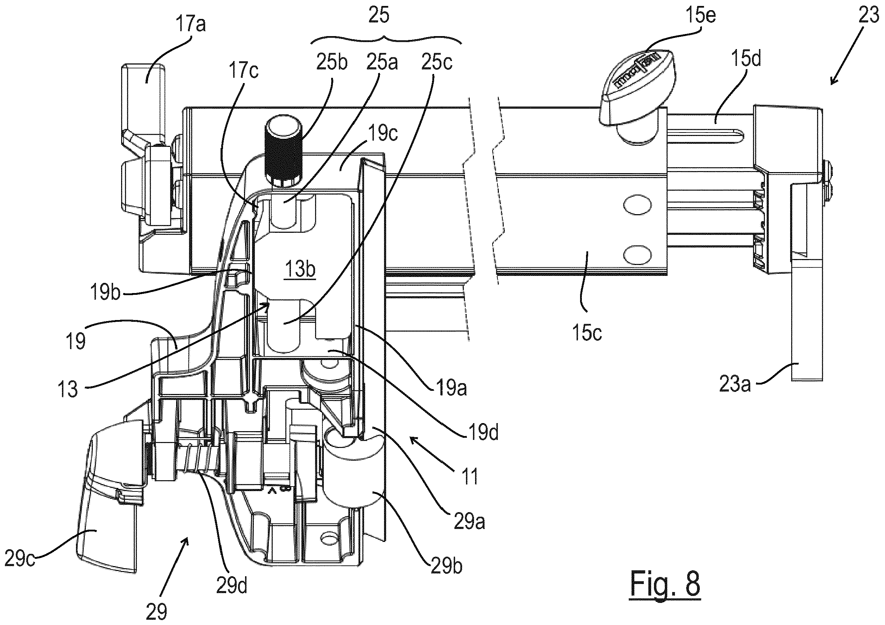

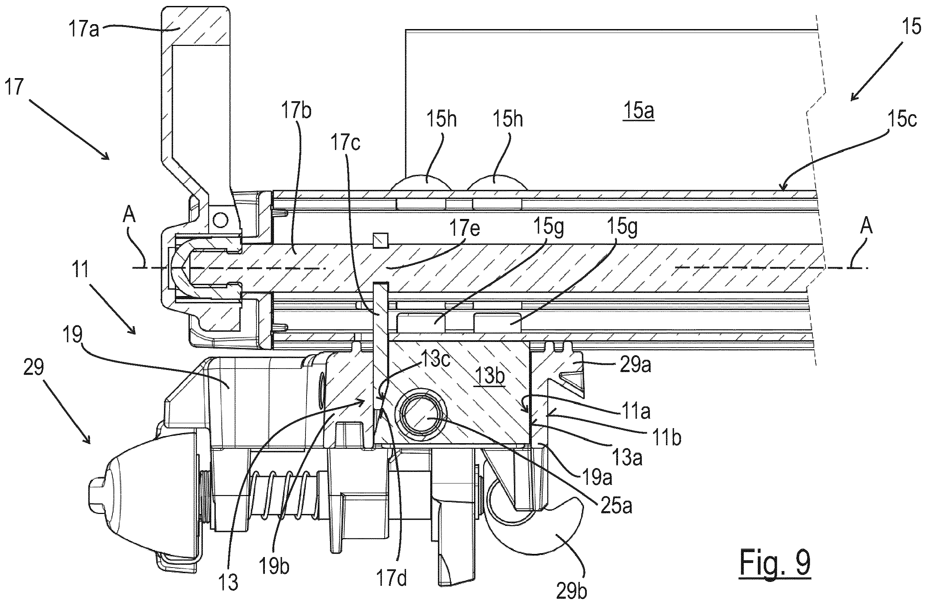

Fig. 6 zeigt eine Ansicht auf den Parallelanschlag in einer Richtung parallel zur Längserstreckung der Positioniereinheit 15, wobei diese im Schnitt dargestellt und die vertikale Schnittebene derart gewählt ist, dass der vorstehend bereits erwähnte, als Treiborgan der Betätigungseinheit dienende Klemmkeil 17c zu sehen ist (vgl. auch Fig. 8 und Fig. 9). Der Klemmkeil 17c wirkt in einer nachstehend näher beschriebenen Weise mit einer Welle 17b der Betätigungseinheit 17 zusammen, die zusammen mit dem Klemmkeil 17c eine Stelleinrichtung der Betätigungseinheit 17 bildet, welche mittels des Hebels 17a betätigt werden kann. Die Welle 17b und der Klemmkeil 17c sind innerhalb des Trägers 15c der Positioniereinheit 15 angeordnet. Auf diese Weise ist die Betätigungseinheit 17 des erfindungsgemäßen Parallelanschlags in die Positioniereinheit 15 integriert.

Der erwähnte Klemmkörper der Ausrichteinheit, worauf nachstehend insbesondere anhand von Fig. 8 und 9 näher eingegangen wird, befindet sich innerhalb des Gehäuses 19 der Basiseinheit 11. Von außen zugänglich ist ein Gewindestift 27, der eine im Einleitungsteil beschriebene Nachstelleinrichtung bildet. Der Gewindestift 27 dient mit seinem im Gehäuse 19 liegenden Ende als Widerlager für den Klemmkeil 17c, wenn der Gewindestift 27 weit genug in das Gehäuse 19 hineingedreht ist.

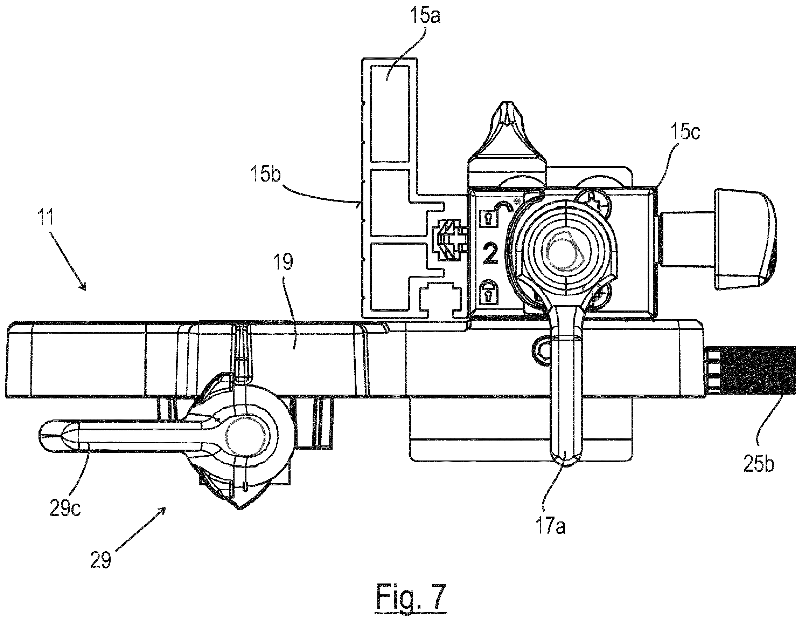

Die Fig. 7 entspricht der Fig. 6, wobei allerdings der Träger 17c nicht im Schnitt dargestellt ist. Deshalb zeigt Fig. 7 am stirnseitigen Ende des als langgestreckter Quader ausgebildeten Trägers 15c den mit der Welle 17b (vgl. Fig. 6) drehfest verbundenen Hebel 17a der Betätigungseinheit.

Wie beispielsweise Fig. 1 zu entnehmen ist, ist im Bereich des Hebels 29c für die Betätigung der Klemmeinrichtung 29 eine Ziffer "1" auf der Basiseinheit 11 angebracht, wohingegen am stirnseitigen Ende des Trägers 15c im Bereich des Hebels 17a für die erfindungsgemäße Betätigungseinheit für die hierdurch erfolgende Betätigung die Ziffer "2" angebracht ist. Es ist von einem Benutzer also zuerst die Basiseinheit 11 am Arbeitstisch 31 festzuklemmen und danach die Positioniereinheit auszurichten und zu fixieren. Ein offenes bzw. ein geschlossenes Vorhängeschloss symbolisiert den "offenen" bzw. "geschlossenen" Zustand der jeweils betätigbaren Mechanik.

In Fig. 8 ist unter anderem zu erkennen, dass die obere Klemmbacke 29a der Basiseinheit 11 an deren Gehäuse 19 ausgebildet ist und sich über die gesamte Breite des Gehäuses 19 erstreckt. Die untere Klemmbacke 29b wird mittels des Hebels 29c betätigt und zwischen einer Fixierstellung und einer Freigabestellung relativ zur oberen Klemmbacke 29a bewegt.

Wie bereits erwähnt, ist in dem Gehäuse 19 unter anderem der als Klemmbacke ausgebildete Klemmkörper 13b der erfindungsgemäßen Ausrichteinheit 13 angeordnet, der sich zwischen zwei in Querrichtung verlaufenden, Begrenzungsabschnitte bildenden Wänden 19a, 19b des Gehäuses 19 befindet.

Wie Fig. 9 zeigt, ist die im Bereich der oberen Klemmbacke 29a verlaufende Wand 19a an ihrer dem Klemmkörper 13b zugewandten Seite mit einer exakt bearbeiteten, planen Ausrichtfläche 11a versehen, die bei am Profil 33 des Arbeitstisches 31 (vgl. insbesondere die Fig. 1 bis 3) festgeklemmter Basiseinheit 11 eine definierte Referenzfläche für den Klemmkörper 13b bereitstellt, mit dem die Positioniereinheit 15 fest verschraubt und somit - wie bereits erwähnt - ohne Spiel fest verbunden ist. Diese Ausrichtfläche 11a der Basiseinheit 11 verläuft exakt parallel zu einer gegenüberliegenden Außenfläche 11b der Basiseinheit 11, mit der diese im festgeklemmten Zustand am Profil 33 des Arbeitstisches 31 anliegt.

Die Klemmbacke 13b der Ausrichteinheit 13 ist an ihrer der Wand 19a zugewandten Seite ebenfalls mit einer exakt bearbeiteten, planen Ausrichtfläche 13a versehen, wodurch der Klemmkörper 13b exakt relativ zur Basiseinheit 11 ausgerichtet werden kann, wenn der Klemmkörper 13b mittels der erfindungsgemäßen Betätigungseinheit, worauf nachstehend näher eingegangen wird, mit seiner Ausrichtfläche 13a gegen die Außenfläche 11b der Basiseinheit 11 gedrückt wird.

Die Befestigung der Positioniereinheit 15 am Klemmkörper 13b erfolgt durch Verschraubung über den Träger 15c, der als quaderförmiger Hohlkörper ausgebildet ist und beispielsweise als Profil vorgesehen sein kann. Mit seiner unteren Wand ist der Träger 15c über insgesamt vier Befestigungsschreiben 15g mit dem Klemmkörper 13b fest verschraubt. Von oben sind diese Schrauben 15g durch Öffnungen in einer oberen Wand des Trägers 15c zugänglich, die mit Abdeckkappen 15h verschlossen sind.

Die Orientierung des Trägers 15c und damit der Positioniereinheit 15 insgesamt relativ zum Klemmkörper 13b kann in gewissen Grenzen verändert werden. Hierzu sind in der erwähnten unteren Wand des Trägers 15c für die Schrauben 15g zumindest in einer Richtung etwas vergrößerte Bohrungen, d.h. nicht-kreisförmige Löcher, oder Langlöcher ausgebildet, die bei gelösten Schrauben 15g eine gewisse Schrägstellung derart erlauben, dass die Längsachse der Positioniereinheit 15 nicht exakt senkrecht zu den beiden zusammenwirkenden Ausrichtflächen 11a, 13a verläuft. Hierdurch kann ein gewünschter Freischnittwinkel von beispielsweise 0,8° zwischen der Längserstreckung der Positioniereinheit 15 und einer Normalen auf der Ausrichtfläche 13a des Klemmkörpers 13b eingestellt und durch Festziehen der Schrauben 15g fixiert werden.

Bei Benutzung des erfindungsgemäßen Parallelanschlags sind die Schrauben 15g stets fest angezogen, so dass die Positioniereinheit 15 spielfrei am Klemmkörper 13b befestigt und folglich mittels des Klemmkörpers 13b ausrichtbar ist.

Eine Feineinstellung in Querrichtung erfolgt mittels des bereits erwähnten Spindeltriebs, wobei die Handhabe 25b (vgl. Fig. 8) als ein einstückig mit einer Spindel 25a ausgebildeter Bedienabschnitt vorgesehen ist, wobei die Spindel 25a ein Außengewinde aufweist, das mit einem im Klemmkörper 13b ausgebildeten Innengewinde zusammenwirkt, so dass insofern der Klemmkörper 13b als Spindelmutter wirksam ist. Durch Drehen an der Handhabe 25b kann somit die Position des Klemmkörpers 13b in Querrichtung, also parallel zu seiner Ausrichtfläche 13a, relativ zur Basiseinheit 11 verstellt werden. Diese Feineinstellung kann beispielsweise so eingestellt sein, dass eine Umdrehung der Handhabe 25b und somit der Spindel 25a einem Stellweg von 1mm entspricht, wobei als Einstellhilfe an der Handhabe 25b in Umfangsrichtung verteilte, z.B. entsprechend einem Stellweg von 1/10mm voneinander beabstandete Teilungsstriche angebracht sein können und an dem Gehäuse 19 eine feste Referenzmarkierung für diese Teilungsstriche angebracht sein kann, so dass der Benutzer eine jeweils gewünschte Verstellung exakt ablesen kann. Der maximale Verstellweg zwischen einem linken Endanschlag und einem rechten Endanschlag kann beispielsweise 7mm betragen, was dann also sieben Umdrehungen an der Handhabe 25b entspricht. Als Einstellhilfe können die Endanschläge z.B. durch zwei durchgezogene, entsprechend beabstandete Linien und kann eine Mittelstellung zwischen den Endanschlägen durch eine gestrichelte Linie in der Mitte zwischen den beiden durchgezogenen Linien auf der Oberseite des Gehäuses 19 veranschaulicht sein (vgl. auch die Fig. 1 bis 8, wo die vorstehend erwähnten Einstellhilfen dargestellt sind).

Die Spindel 25a ist im Gehäuse 19 gelagert, wobei die Durchbrüche in den entsprechenden Abschnitten 19c, 19d für die Spindel 25a derart ausgebildet sind, dass die Spindel 25a mit Spiel innerhalb dieser Durchbrüche angeordnet ist, um das nachstehend näher beschriebene Bewegen des Klemmkörpers 13b quer zur Längsachse der Spindel 25a zu ermöglichen.

Auf der von der Handhabe 25b abgewandten Seite des Klemmkörpers 13b ist zwischen dem entsprechenden Gehäuseabschnitt 19d und dem Klemmkörper 13b eine Druckfeder 25c angeordnet, die den Klemmkörper 13b in Richtung der Längsachse der Spindel 25a vorspannt und somit das Gewinde des Klemmkörpers 13b gegen das Gewinde der Spindel 25a drückt und so ein Spiel in Querrichtung beseitigt.

Eine Spielbeseitigung senkrecht dazu, also parallel oder zumindest im Wesentlichen parallel zur Längserstreckung der Positioniereinheit 15 erfolgt durch die erfindungsgemäße Betätigungseinheit 17 (vgl. insbesondere Fig. 9). Der bereits erwähnte Klemmkeil 17c, der plattenförmig ausgebildet ist, ist mit einer Aussparung 18 (vgl. Fig. 6) versehen, die einen Bereich aufweist, mit welchem der Klemmkeil 17c mit einem bezüglich der Drehachse A der Welle exzentrisch angeordneten Steuerabschnitt 17e zusammenwirkt. Durch Drehen der Welle 17b wird somit deren Drehbewegung auf den Klemmkeil 17c übertragen und in eine vertikale Bewegung des Klemmkeils 17c senkrecht zur Drehachse A der Welle 17b umgesetzt. An seinem innerhalb des Gehäuses 19 gelegenen Endbereich ist der Klemmkeil 17c mit einer als Steuerfläche dienenden Keilfläche 17d versehen, die mit einer unter einem entsprechenden Winkel zur Drehachse A der Welle 17b verlaufenden, als Treibfläche 13c dienenden Keilfläche zusammenwirkt, die am Klemmkörper 13b ausgebildet ist.

Wird der Klemmkeil 17c durch Verdrehen der Welle 17b in das Gehäuse 19 hineinbewegt, also nach unten bewegt, drückt sich der Klemmkeil 17c zwischen die Wand 19b und den Klemmkörper 13b, so dass dieser aus seiner mit Spiel behafteten Losestellung in eine spielfreie Feststellung bewegt wird, in der die Ausrichtfläche 13a des Klemmkörpers 13b gegen die Ausrichtfläche 11a der Wand 19a der Basiseinheit 11 gedrückt ist. In dieser Feststellung ist das Spiel zwischen Klemmkörper 13b und Basiseinheit 11 beseitigt und ist der Klemmkörper 13b exakt in der durch die Ausrichtflächen 13a, 11a vorgegebenen Weise ausgerichtet, womit auch die Positioniereinheit 15, die fest mit dem Klemmkörper 13b verschraubt ist, in vorgegebener Weise relativ zur Basiseinheit 11 ausgerichtet ist. Da die Basiseinheit 11 spielfrei am Profil 33 (vgl. Fig. 1 bis 3) des Arbeitstisches 31 festgeklemmt ist, ist somit eine exakte Ausrichtung der Positioniereinheit 15 relativ zum Arbeitstisch 31 und somit zum nicht dargestellten Werkzeug der Bearbeitungsmaschine gegeben.

Die erfindungsgemäße Betätigungseinheit 17 ist derart ausgebildet, dass ein Schwenkwinkel von etwa 90° des Betätigungshebels 17a erforderlich ist, um den Klemmkörper 13b aus der Losestellung in die spielfreie Feststellung zu bewegen. Es versteht sich, dass der Weg, den der Klemmkörper 13b hierbei zurücklegt, sehr klein ist, da lediglich das zuvor in der Losestellung vorhandene Spiel beseitigt wird.

Das Widerlager für den Klemmkeil 17c wird von der entsprechenden Wand 19b des Gehäuses 19 der Basiseinheit 11 bereitgestellt. Wenn der als Nachstelleinrichtung dienende Gewindestift 27 der Basiseinheit 11 (vgl. insbesondere Fig. 6) weiter in das Gehäuse 19 hineingedreht wird, steht das freie Ende des Gewindestifts 27 über die dem Klemmkörper 13b zugewandte Innenseite der Wand 19b hinaus vor. In dieser Stellung des Gewindestiftes 27b dient dann dessen freies Ende als Widerlager für die vom Klemmkörper 13b abgewandte Rückseite des Klemmkeils 17c. Der Abstand zwischen Widerlager und Klemmkörper 13b kann auf diese Weise verändert und insbesondere verkleinert werden, um beispielsweise bei Verschleiß die Geometrie derart nachstellen zu können, dass der Klemmkeil 17c stets derart zwischen Widerlager und Klemmkörper 13b gedrückt werden kann, dass der Klemmkörper 13b sicher und zuverlässig spielfrei gemacht, d.h. fest gegen die Ausrichtfläche 11a der Basiseinheit 11 gedrückt werden kann.

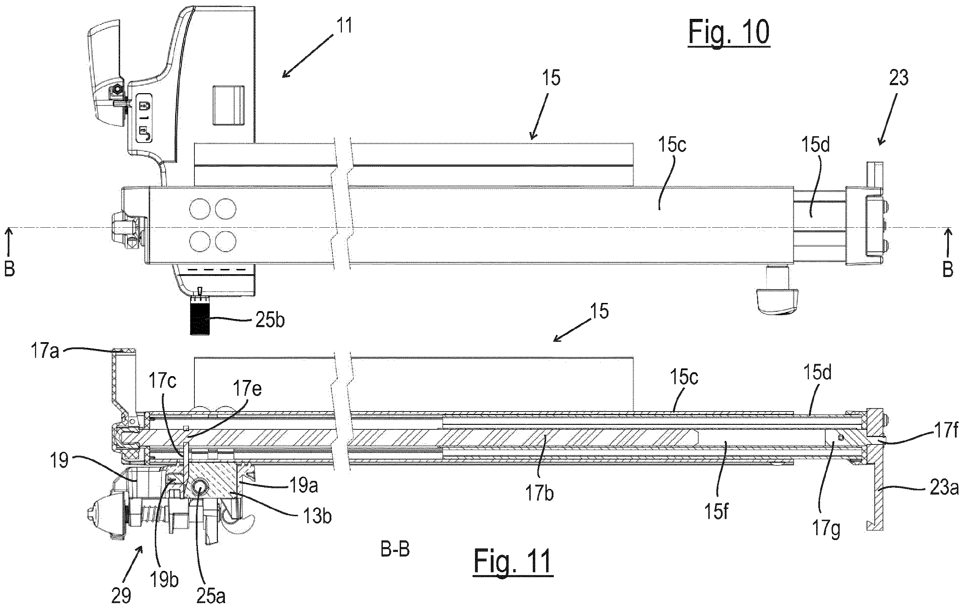

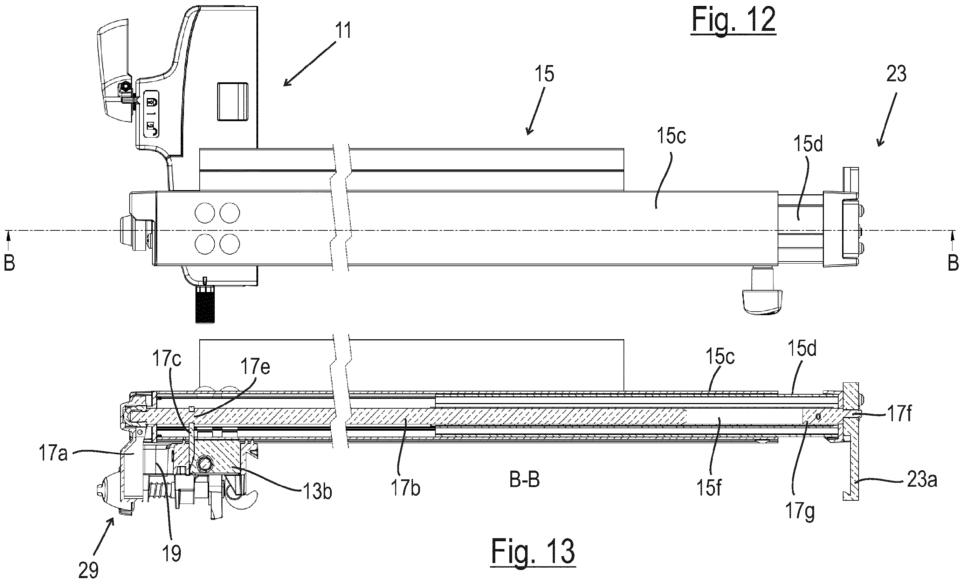

Wenn der Hebel 17a über die vorstehend erwähnten 90° hinaus weitergedreht wird, dann wird die vorstehend bereits erwähnte Fixiereinheit 23 derart betätigt, dass das Fixierorgan 23a aus einer Freigabestellung gemäß Fig. 10 und 11 vertikal nach oben in eine Fixierstellung gemäß den Fig. 12 und 13 bewegt wird. Hierzu ist an einer nachstehend näher beschriebenen Verlängerung der Welle 17b ebenfalls ein als Steuerabschnitt dienender Exzenterabschnitt 17f ausgebildet, der bezüglich der Drehachse A der Welle 17b exzentrisch angeordnet ist und auf dem das Fixierorgan 23a angebracht ist.

Wie die Fig. 11 und 13 zeigen, ragt die Welle 17b in ein als Rohr ausgebildetes Verbindungsstück 15f hinein, das im bereits erwähnten Auszug 15d angebracht ist. Mit diesem auch als Verbindungsbuchse bezeichneten Verbindungsstück 15f ist einerseits die Welle 17b und ist andererseits ein Endstück 17g drehfest verbunden, an welchem der erwähnte Exzenterabschnitt 17f für das Fixierorgan 23a ausgebildet ist.

Auf diese Weise ist auch die wirksame Länge der Welle 17b verlängerbar, d.h. wie die Positioniereinheit 15 mit ihrem im Träger 15c längsverschieblich angeordneten Auszug 15d ist auch die Welle 17b teleskopierbar, so dass für jede eingestellte Länge der Positioniereinheit 15 eine Drehung der Welle 17b nicht nur auf den benutzerseitig angebrachten Klemmkeil 17c, sondern auch auf das am gegenüberliegenden Ende angeordnete Fixierorgan 23a der Fixiereinheit 23 übertragen werden kann.

Die beiden Exzenterabschnitte 17e und 17f sind in Umfangsrichtung um die Drehachse A der Welle derart relativ zueinander angeordnet, dass das Fixierorgan 23a seine obere Endstellung später erreicht als der Klemmkeil 17c seine untere Endstellung. Hierdurch ist sichergestellt, dass der Klemmkörper 13b seine spielfreie Feststellung erreicht, bevor die Positioniereinheit 15 mittels der Fixiereinheit 23 auf der gegenüberliegenden Seite am Arbeitstisch festgeklemmt wird. Durch die Fixiereinheit 23 wird folglich die mittels des Klemmkeils 17c erreichte exakte Ausrichtung der Positioniereinheit 15 zusätzlich gesichert, womit insgesamt eine hohe Positioniertreue erreicht wird.

### Bezugszeichenliste

- 11: Basiseinheit
- 11a: Ausrichtfläche
- 11b: Außenfläche
- 13: Ausrichteinheit
- 13a: Ausrichtfläche
- 13b: Klemmkörper
- 13c: Treibfläche, Keilfläche
- 15: Positioniereinheit
- 15a: Anschlageinheit
- 15b: Anschlagfläche
- 15c: Träger
- 15d: Auszug
- 15e: Feststellschraube
- 15f: Verbindungsstück
- 15g: Schraube
- 15h: Abdeckkappe
- 17: Betätigungseinheit
- 17a: Betätigungsorgan, Hebel
- 17b: Welle
- 17c: Treiborgan
- 17d: Steuerfläche, Keilfläche
- 17e: Steuerabschnitt, Exzenterabschnitt
- 17f: Steuerabschnitt, Exzenterabschnitt
- 17g: Endstück
- 18: Aussparung
- 19: Gehäuse
- 19a: Begrenzungsabschnitt mit Ausrichtfläche, Wand
- 19b: Begrenzungsabschnitt als Widerlager, Wand
- 19c: Gehäuseabschnitt
- 19d: Gehäuseabschnitt
- 21: Arbeitsauflage
- 23: Fixiereinheit
- 23a: Fixierorgan
- 23b: Fortsatz
- 25: Einstelleinrichtung
- 25a: Spindel
- 25b: Handhabe
- 25c: Druckfeder
- 27: Nachstelleinrichtung
- 29: Klemmeinrichtung
- 29a: obere Klemmbacke
- 29b: untere Klemmbacke
- 29c: Hebel
- 29d: Druckfeder
- 31: Arbeitstisch
- 33: Befestigungsprofil

- L: Längsrichtung
- A: Längsachse der Welle

## Patentansprüche

1. Positioniereinrichtung, insbesondere Anschlageinrichtung, bevorzugt Parallelanschlag, für eine Bearbeitungsmaschine, insbesondere für eine Unterflurzugsäge, Tischkreissäge oder Formatkreissäge,
wobei die Positioniereinrichtung an der Bearbeitungsmaschine anbringbar und dazu ausgebildet ist, im an die Bearbeitungsmaschine angebrachten Zustand ein mittels der Bearbeitungsmaschine zu bearbeitendes Werkstück relativ zu einem Werkzeug der Bearbeitungsmaschine, insbesondere relativ zu einem Sägeblatt, zu positionieren, und
wobei die Positioniereinrichtung umfasst:
- eine Basiseinheit (11), die an der Bearbeitungsmaschine anbringbar und dazu ausgebildet ist, im an der Bearbeitungsmaschine angebrachten Zustand ohne Spiel in einer vorgegebenen Lage relativ zur Bearbeitungsmaschine ausgerichtet zu sein,
- eine Ausrichteinheit (13), die an der Basiseinheit (11) mit Spiel angeordnet ist und eine Ausrichtfläche (13a) aufweist, die einer an der Basiseinheit (11) ausgebildeten Ausrichtfläche (11a) zugeordnet ist,
- eine, insbesondere mechanische, Betätigungseinheit (17), mit der die Ausrichteinheit (13) aus einer mit dem Spiel behafteten Losestellung in eine spielfreie Feststellung bewegbar ist, in der die Ausrichteinheit (13) mit ihrer Ausrichtfläche (13a) gegen die Ausrichtfläche (11a) der Basiseinheit (11) gedrückt und ohne Spiel in einer vorgegebenen Lage relativ zur Basiseinheit (11) ausgerichtet ist, und
- eine Positioniereinheit (15), die ohne Spiel fest mit der Ausrichteinheit (13) verbunden und dazu ausgebildet ist, mit dem zu positionierenden Werkstück zusammenzuwirken.

2. Positioniereinrichtung nach Anspruch 1,
wobei die Positioniereinheit (15) eine langgestreckte Anschlageinheit (15a) mit einer sich in einer Längsrichtung (L) erstreckenden Anschlagfläche (15b) für das Werkstück umfasst, insbesondere wobei die Ausrichtfläche (13a) der Ausrichteinheit (13) senkrecht zur Längsrichtung (L) der Anschlagfläche (15b) verläuft.

3. Positioniereinrichtung nach Anspruch 1 oder 2,
wobei die Betätigungseinheit (17) an der Positioniereinheit (15) oder an der Ausrichteinheit (13) angeordnet ist, insbesondere wobei die Betätigungseinheit (17) in die Positioniereinheit (15) integriert ist.

4. Positioniereinrichtung nach einem der vorhergehenden Ansprüche, wobei die Basiseinheit (11) ein Gehäuse (19) umfasst, in welches die Ausrichteinheit (13), insbesondere ein Klemmkörper (13b) der Ausrichteinheit (13), aufgenommen ist, insbesondere wobei die Ausrichteinheit (13) zwischen zwei einander gegenüberliegenden Begrenzungsabschnitten (19a, 19b) des Gehäuses (19) angeordnet ist, von denen der eine mit der Ausrichtfläche (11a) der Basiseinheit (11) versehen und der andere als Widerlager für die Betätigungseinheit (17) ausgebildet ist.

5. Positioniereinrichtung nach einem der vorhergehenden Ansprüche, wobei die Basiseinheit (11) und die Ausrichteinheit (13) im Bereich eines benutzerseitigen Endbereiches der Positioniereinheit (15) angeordnet sind.

6. Positioniereinrichtung nach einem der vorhergehenden Ansprüche, wobei die Positioniereinheit (15) zusätzlich eine Fixiereinheit (23) aufweist und dazu ausgebildet ist, mit der Fixiereinheit (23) an der Bearbeitungsmaschine fixiert zu werden, wobei die Fixiereinheit (23) mit Abstand von der Basiseinheit (11) an der Positioniereinheit (15) angeordnet ist, insbesondere wobei die Fixiereinheit (23) an einem Endbereich der Positioniereinheit (15) angeordnet ist, der einem benutzerseitigen Endbereich der Positioniereinheit (15) gegenüberliegt.

7. Positioniereinrichtung nach Anspruch 6,
wobei die Positioniereinrichtung (15) zur Veränderung des Abstandes zwischen Basiseinheit (11) und Fixiereinheit (23) und somit zur Anpassung an die Bearbeitungsmaschine in der Länge veränderlich ist, insbesondere wobei die Positioniereinrichtung (15) teleskopierbar ist, und/oder wobei die Betätigungseinheit (17) zusätzlich dazu ausgebildet ist, die Fixiereinheit (23) zwischen einer Fixierstellung und einer Freigabestellung zu bewegen, insbesondere wobei im Zuge eines Betätigungsvorgangs die Ausrichteinheit (13) und die Fixiereinheit (23) zeitlich nacheinander bewegbar sind.

8. Positioniereinrichtung nach einem der vorhergehenden Ansprüche, wobei die Ausrichteinheit (13) einen Klemmkörper (13b) umfasst, der an einer Seite mit der Ausrichtfläche (13a) versehen ist und an einer gegenüberliegenden Seite eine Treibfläche (13c) aufweist, die mittels der Betätigungseinheit (17) beaufschlagbar ist.

9. Positioniereinrichtung nach einem der vorhergehenden Ansprüche, wobei die Betätigungseinheit (17) ein zwischen einer passiven Stellung, die der Losestellung der Ausrichteinheit (13) entspricht, und einer aktiven Stellung, die der Feststellung der Ausrichteinheit (13) entspricht, bewegbares Treiborgan (17c) umfasst, das in der aktiven Stellung einerseits an einem von der Basiseinheit (11) gebildeten Widerlager (19b) abgestützt ist und andererseits die Ausrichteinheit (13) beaufschlagt und dabei diese mit ihrer Ausrichtfläche (13a) gegen die Ausrichtfläche (11a) der Basiseinheit (11) drückt.

10. Positioniereinrichtung nach Anspruch 9,
wobei das Treiborgan (17c) eine Steuerfläche (17d) aufweist, insbesondere eine Keilfläche, die bei der Bewegung des Treiborgans (17c) in seine aktive Stellung eine Treibfläche (13c) der Ausrichteinheit (13) beaufschlagt, insbesondere wobei die Treibfläche (13c) der Ausrichteinheit (13) eine Keilfläche umfasst, und/oder
wobei das Treiborgan (17c) ein Klemmorgan umfasst, insbesondere einen mit einer Keilfläche (17d) versehenen, bevorzugt plattenförmigen, Klemmkeil, insbesondere wobei das Klemmorgan in seiner aktiven Stellung zwischen ein von der Basiseinheit (11) gebildetes Widerlager (19b) und die Ausrichteinheit (13) geklemmt ist.

11. Positioniereinrichtung nach einem der vorhergehenden Ansprüche, wobei die Betätigungseinheit (17) eine Stelleinrichtung (17b, 17c) und ein mit der Stelleinrichtung (17b, 17c) zusammenwirkendes Betätigungsorgan (17a) umfasst, wobei das Betätigungsorgan (17a) durch einen Benutzer bewegbar und diese Betätigungsbewegung des Betätigungsorgans (17a) in eine in die Bewegung der Ausrichteinheit (13) umsetzbare Stellbewegung der Stelleinrichtung (17b, 17c) umsetzbar ist,
insbesondere wobei die Stelleinrichtung eine Welle (17b) mit einer Längsachse (A) umfasst und die Stellbewegung der Welle (17b) eine Drehung um deren Längsachse (A) ist.

12. Positioniereinrichtung nach Anspruch 11,
wobei die Stelleinrichtung zusätzlich zu der Welle (17b) zumindest ein Treiborgan (17c) umfasst und die Stellbewegung der Welle (17b) in eine Bewegung des Treiborgans (17c) zwischen einer passiven Stellung, die der Losestellung der Ausrichteinheit (13) entspricht, und einer aktiven Stellung, die der Feststellung der Ausrichteinheit (13) entspricht, umsetzbar ist, insbesondere wobei die Welle (17b) mit einem Steuerabschnitt (17e), insbesondere einem Exzenterabschnitt, versehen ist, der mit dem Treiborgan (17c) derart zusammenwirkt, dass das Treiborgan (17c) bei einer Drehung der Welle (17b) seine Bewegung in einer senkrecht zur Längsachse (A) der Welle (17b) verlaufenden Ebene ausführt.

13. Positioniereinrichtung nach Anspruch 12,
wobei die Welle (17b) mit zumindest einem weiteren, entlang der Längsachse (A) vom Steuerabschnitt (17e) für das Treiborgan (17c) entfernt gelegenen Steuerabschnitt (17f), insbesondere einem Exzenterabschnitt, versehen ist, der mit einem zusätzlich zu dem Treiborgan (17c) vorgesehenen Funktionsorgan (23a) derart zusammenwirkt, dass das Funktionsorgan (23a) bei einer Drehung der Welle (17b) eine Arbeitsbewegung in einer senkrecht zur Längsachse (A) der Welle (17b) verlaufenden Ebene ausführt, insbesondere wobei das Funktionsorgan (23a) ein Bestandteil einer Fixiereinheit (23) der Positioniereinheit (15) ist und die Arbeitsbewegung des Funktionsorgans (23a) die Fixiereinheit (23) zwischen einem Fixierzustand und einem Freigabezustand verstellt.

14. Positioniereinrichtung nach einem der vorhergehenden Ansprüche, wobei eine, vorzugsweise mit der Ausrichteinheit (13) zusammenwirkende, Einstelleinrichtung (25) vorgesehen ist, mit der die Positioniereinheit (15) relativ zur Basiseinheit (11) verstellbar ist, insbesondere in einer Richtung parallel zur Ausrichtfläche (13a) der Ausrichteinheit (13), insbesondere wobei die Einstelleinrichtung (25) einen Spindeltrieb (25a) umfasst, und/oder wobei die Basiseinheit (11) mit einer Nachstelleinrichtung (27) versehen ist, mit der das Spiel, mit dem die Ausrichteinheit (13) in ihrer Losestellung behaftet ist, verringerbar ist, insbesondere wobei mit der Nachstelleinrichtung (27) die Position eines Widerlagers (19b) für die Betätigungseinheit (17), insbesondere für ein Treiborgan (17c) der Betätigungseinheit (17), veränderbar ist.

15. Bearbeitungsmaschine, insbesondere Unterflurzugsäge, Tischkreissäge oder Formatkreissäge, mit einem sich im Betrieb bewegenden Werkzeug, insbesondere einem im Betrieb rotierenden Sägeblatt, und mit einer Positioniereinrichtung nach einem der vorhergehenden Ansprüche zum Positionieren eines zu bearbeitenden Werkstücks relativ zu dem Werkzeug.
